# EUROPÄISCHE PATENTSCHRIFT

(11) **EP 1 383 295 B1**
(45) Veröffentlichungstag und Bekanntmachung des Hinweises auf die Patenterteilung: **02.06.2004**
(21) Anmeldenummer: 02015867.1
(22) Anmeldetag: 16.07.2002
(51) Int. Cl.: H04L 29/12

(54) **Verfahren zur Adressumsetzung in Paketnetzen und Adressumsetzer für Kommunikationsnetzwerke**
Method for mapping addresses in packet networks and address translation device for communication networks
Méthode de mappage d'adresses dans des réseaux de paquets et appareil de mappage pour réseaux de communication

(43) Veröffentlichungstag der Anmeldung: 21.01.2004
(73) Patentinhaber: SIEMENS AKTIENGESELLSCHAFT, 80333 München (DE)
(72) Erfinder: Ruckstuhl, Hanspeter, Dipl.-Ing., 82515 Wolfratshausen (DE); Stupka, Jean-Marie, 82110 Germering (DE)

(56) Entgegenhaltungen:
- US-A1- 2002 085 561

## Beschreibung

Moderne Paketnetzprotokolle, z.B. das Internetprotokoll IP, verwenden für die Adressierung der Endgeräte und das Routing der Datenpakete zwischen Ursprung und Ziel dieselben Adressen, für das Internetprotokoll gebildet aus IP Adresse und UDP/TCP Portnummer (UDP = User Datagram Protocol, TCP = Transmission Control Protocol). Dies erleichtert die globale Kommunikation und Erreichbarkeit, verbraucht aber eine sehr große Anzahl globaler, d.h. weltweit eindeutiger Adressen.

In der Praxis werden deshalb oft Verfahren zur Reduktion der Anzahl der für die weltweite Kommunikation benötigten globalen Adressen eingesetzt. Es werden lokale Netze mit privaten, nur lokal eindeutigen und nur lokal gültigen Adressen gebildet. Für IP Netze, die auf IP Version 4 (IPv4) basieren, werden im IETF RFC 1918 Adreßbereiche für private Netze definiert. Ein weiteres IETF RFC ist in Vorbereitung und derzeit als Draft unter dem Titel "Special-Use IPv4 Addresses" verfügbar. Der Dateiname der aktuellen Draft Version 3 lautet "draft-iana-special-ipv4-03.txt". Diese Draft Version 3 ist im Internet unter anderem bei der IETF erhältlich.

Die netzübergreifende Kommunikation verlangt bei Einsatz privater bzw. lokaler Netze die Umsetzung der lokalen Adressen in andere lokale bzw. globale Adressen. Dieses Verfahren wird im folgenden Adreßumsetzung genannt. In der Praxis wird Adreßumsetzung auch dazu eingesetzt, das eigene Netz gegen unautorisierte Zugriffe von außen zu sichern.

Adreßumsetzung kommt in den heute weit verbreiteten IP Netzen häufig zum Einsatz. Es wird in diesem speziellen Umfeld, d.h. bei Zusammenschaltung von IP Netzen, als Network Address Translation NAT oder Network Port Address Translation NPAT bezeichnet und ist im IETF RFC 1631 definiert. NAT bzw. NPAT hat sich für die Datenkommunikation zwischen Endgeräten und Servern bewährt.

Moderne Paketnetze sind sowohl für Echtzeitkommunikation, z.B. Sprache, als auch für die Übertragung von Daten ohne Echtzeitanforderungen geeignet. Echtzeitkommunikation in Paketnetzen funktioniert in der Regel nach dem Prinzip der Separierung von Verbindungs- und Nutzkanalsteuerung. Es werden also, anders als im herkömmlichen Telefonnetzwerk, zumindest auf logischer Ebene unterschiedliche Netzelemente zur Verbindungssteuerung und zur Nutzkanalsteuerung verwendet. Die Verbindungssteuerung übernehmen spezialisierte Kontrollelemente, welche mit Endgeräten, Media Gateways, Access Konzentratoren, Multimedia Servern und anderen Netzelementen und natürlich auch miteinander kommunizieren.

Für den Anwendungsfall Sprach- und Multimediakommunikation werden diese spezialisierten Kontrollelemente oft auch Soft-Switches genannt. SoftSwitches unterstützen, je nach Umfeld und Anwendungsfall, unterschiedlichste Prozeduren und Protokolle zur Verbindungsteuerung, z.B. Session Initiation Protocol SIP, Bearer Independent Call Control BICC, ITU-T H.323, ITU-T H.248 oder Media Gateway Control Protocol MGCP.

All diese Verfahren zur Steuerung von Echtzeitkommunikation haben gemein, daß die Adressen der beteiligten Kommunikationspartner über das Verbindungssteuerungsprotokoll ausgetauscht werden. Kommt nun Adreßumsetzung zum Einsatz, sind die mittels Verbindungssteuerungsprotokoll signalisierten Adressen der beteiligten Endgeräte und die tatsächlich zur Adressierung der Nutzkanaldaten benötigten Adressen unterschiedlich. Das bedeutet, daß die Echtzeitkommunikation bei Einsatz von Adreßumsetzung nicht funktioniert.

Ein Verfahren zur Adreßumsetzung ist aus der am selben Tag hinterlegten Anmeldung derselben Anmelderin mit dem Titel "Verfahren zur Adreßumsetzung in Paketnetzen und Steuerelement für Kommunikationsnetzwerke" bekannt, das sich dadurch auszeichnet, daß durch ein Steuerelement der nutzkanalsteuernde Adreßumsetzer initialisiert und/oder die Adreßumsetzung private Adresse <-> globale Adresse für das verbindungsanfordernde Element ermittelt wird. Allerdings funktioniert dieses Verfahren im Fall dynamischer Adreßumsetzung nicht zufriedenstellend, wenn zur Übermittlung der Nutzdaten mehrere Nutzdatenkanäle eingesetzt werden, da in den Signalisierungsnachrichten nur eine Adreßumsetzungsbeziehung weitergeleitet werden kann.

Die von der Verbindungssteuerung verwendeten Protokolle, wie z.B. das BICC IP Bearer Control Protocol IPBCP (ITU-T Q.1970) oder das Session Description Protocol SDP (IETF RFC2327), übertragen in der Regel nur eine aus IP und Portnummer gebildete Adresse für eine Medien-Anwendung. Verlangt eine Anwendung gleichzeitig mehrere Ports bzw. Datenkanäle, wie z.B. das Real Time Protocol RTP, das einen gesonderten Kanal für das Real Time Control Protocol RTCP erfordert (siehe z.B. US 2002 00 85561), läßt sich dies mit den bekannten Verfahren nicht lösen.

Es ist eine Aufgabe der vorliegenden Erfindung, die bekannten Verfahren zur Adreßumsetzung in Paketnetzen und Adreßumsetzer für Kommunikationsnetzwerke zu verbessern.

Diese Aufgabe wird durch ein Verfahren zur Adreßumsetzung gemäß der Merkmale des Patentanspruchs 1 und durch ein Steuerelement für Kommunikationsnetzwerke gemäß der Merkmale des Patentanspruchs 8 gelöst.

Bevorzugte Ausführungsformen sind Gegenstand der abhängigen Ansprüche.

Gemäß der vorliegenden Erfindung wird ein Verfahren zur Adreßumsetzung für eine über eine Signalisierungsverbindung gesteuerte Nutzdatenverbindung, wobei die Nutzdatenverbindung aus mehreren Datenkanälen gebildet wird, vorgesehen, demgemäß für ein verbindungsanforderndes Netzelement, das einem ersten Kommunikationsnetz zugeordnet ist, eine Basisadreßumsetzungsbeziehung für einen ersten der Datenkanäle zwischen dem ersten und einem zweiten Kommunikationsnetz ermittelt wird, und wobei sich das Verfahren dadurch auszeichnet, daß alle weiteren Datenkanäle durch einen vorgegebenen Algorithmus aus der Basisadreßumsetzungsbeziehung gebildet und durch einen Adreßumsetzer eingestellt werden.

Gemäß der vorliegenden Erfindung wird ferner ein Adreßumsetzer für Kommunikationsnetzwerke vorgesehen, der an einem U-bergang zwischen einem ersten und einem zweiten Kommunikationsnetz angeordnet ist, wobei das erste Netz nur innerhalb des ersten Netzes gültige Adressen aufweist,
- mit Mitteln zum Empfang einer Nachricht, die explizit oder implizit Informationen über eine Anzahl zu reservierender Datenkanäle aufweist,
- mit Mitteln zum Ermitteln einer Basisadreßumsetzungsbeziehung und basierend auf dieser Basisadreßumsetzungsbeziehung weiterer Adreßumsetzungsbeziehungen, wobei die Gesamtzahl der Adreßumsetzungsbeziehungen an der Anzahl zu reservierender Datenkanäle orientiert ist.

Die Erfindung ist besonders zum Einsatz im Zusammenhang mit einem Verfahren zur Adreßumsetzung für eine über eine Signalisierungsverbindung gesteuerte Nutzdatenverbindung zwischen einem ersten Kommunikationsnetz, welches nur innerhalb des ersten Netzes gültige Adressen aufweist, und einem zweiten Kommunikationsnetz geeignet, wobei eine Verbindungsanforderung von einem im ersten Netz angeordneten ersten Netzelement, dem eine erste Adresse zugeordnet ist, ausgeht, wobei die Verbindungsanforderung eine Kommunikation mit einem über das zweite Netz erreichbaren zweiten Netzelement, dem eine zweite Adresse zugeordnet ist, zum Ziel hat und die Verbindungsanforderung zunächst zu einem an einem Übergang zwischen dem ersten und dem zweiten Netz angeordneten Steuerelement des ersten Netzes geleitet wird, wobei das Steuerelement sowohl eine dritte Adresse des ersten Netzes als auch eine vierte Adresse des zweiten Netzes aufweist, demgemäß durch das Steuerelement eine mit der ersten Adresse als Ursprungsadresse und der vierten Adresse als Zieladresse versehene Nachricht über ein nutzdaten-vermittelndes viertes Netzelement gesendet wird, um eine für die über das vierte Netzelement geleitete Nutzdatenverbindung des Netzelementes geltende Adreßumsetzungsbeziehung zwischen dem ersten und dem zweiten Netz zu ermitteln.

Die Erfindung ist besonders im Zusammenhang mit einem Steuerelement für Kommunikationsnetzwerke vorteilhaft anwendbar, das an einem Übergang zwischen einem ersten und einem zweiten Kommunikationsnetz angeordnet ist, wobei das erste Netz nur innerhalb des ersten Netzes gültige Adressen aufweist, und wobei das Steuerelement sowohl eine dritte Adresse des ersten Netzes als auch eine vierte Adresse des zweiten Netzes aufweist,
- mit Mitteln zum Empfang einer Verbindungsanforderung von einem im ersten Netz angeordneten ersten Netzelement, das eine erste Adresse aufweist, wobei die Verbindungsanforderung eine Kommunikation mit einem über das zweite Netz erreichbaren zweiten Netzelement, dem eine zweite Adresse zugeordnet ist, zum Ziel hat,
- mit Mitteln zum Senden einer mit der ersten Adresse als Ursprungsadresse und der vierten Adresse als Zieladresse versehenen Nachricht über ein nutzdatenvermittelndes viertes Netzelement zum Ermitteln einer für eine über das vierte Netzelement geleitete Nutzdatenverbindung des ersten Netzelementes geltende Adreßumsetzungsbeziehung zwischen dem ersten und dem zweiten Netz.

Ein wichtiger Vorteil der Erfindung besteht darin, daß zuverlässig die bei Netzübergängen infolge Adreßumsetzung neu zu verwendenden Absenderadressen und Zieladressen auch dann einstellbar bzw. ermittelbar sind, wenn für die Nutzdatenverbindung mehrere Kanäle erforderlich sind.

Die Erfindung eignet sich besonders gut für IP Netze und die Verwendung im Zusammenhang mit Echtzeitkommunikation in IP Netzen mit getrennter Verbindungs- und Nutzkanalsteuerung.

Die Erfindung weist weiterhin folgende Vorteile auf:
- Es werden keine besonderen Einrichtungen oder Schnittstellen vorausgesetzt. Insbesondere ist keine gesonderte Verbindung oder Schnittstelle zwischen dem verbindungssteuernden Netzelement und dem Adreßumsetzer erforderlich.
- Herkömmlichen Adreßumsetzer, für IP Netze also herkömmlichen NAT/NPAT Router, können leicht um diese Funktionalität erweitert werden, beispielsweise per Software-Upgrade, da keine gesonderte neue Hardware erforderlich ist.
- Die Erfindung ist in heutigen IP Netzen, welche NAT/NPAT verwenden, einsetzbar, ohne daß zusätzliche Netzelemente eingeführt werden müssen.
- Die Prozeduren und Protokolle zur Verbindungssteuerung und die bekannten verbindungssteuernden Netzelemente müssen nicht verändert werden.

Im folgenden werden Ausführungsbeispiele der Erfindung näher erläutert.

Der Anwendungsbereich der Erfindung erstreckt sich, wie eingangs bereits erwähnt, auf Kommunikationsnetzwerke, die so organisiert sind, daß ein erstes und ein zweites Kommunikationsnetz zumindest logisch verschieden voneinander sind. Dabei bedeutet "verschieden" an dieser Stelle, daß ein Element des zweiten Netzes aus dem ersten Netz nicht unmittelbar, sondern nur über einen an einem Übergang der beiden Netze angeordneten Adreßumsetzer erreichbar ist und umgekehrt. Mögliche Gründe dafür und für IP Netze übliche Lösungen wurden eingangs bereits erläutert. Jedem der zwei Netze ist ein Adreßbereich oder Adreßraum zugeordnet.

Der Adreßumsetzer dient der Umsetzung von Adressen zwischen den beiden Netzen. Im folgenden wird ohne Beschränkung der Allgemeinheit angenommen, daß das erste Netz ein lokales oder privates Netz ist und daß das zweite Netz ein öffentliches Netz ist. Der Adreßumsetzer verfügt über eine Reihe bzw. einen Pool von Adressen des öffentlichen Netzes, die dynamisch oder statisch Elementen des nichtöffentlichen Netzes zugewiesen werden können. Nachrichten aus dem öffentlichen in das nichtöffentliche Netz werden dann an die dem ersten Element zugewiesenen Adresse des Adreßumsetzers gerichtet, der beispielsweise anhand einer Tabelle die Zuordnung feststellt und die Nachrichten zur ersten Adresse weiterleitet.

Die Besonderheit besteht bei der Unterteilung in globale und lokale Adressen darin, daß die globalen Adressen auch im lokalen Netz bekannt, eindeutig und gültig sind, wohingegen die lokalen Adressen im globalen Netz mehrdeutig wären, da mehrere lokale Netze diese Adreßbereiche verwenden können. Daher sind die lokalen Adressen definitionsgemäß im globalen Netz unbekannt und ungültig.

Erfindungsgemäß erfolgt nun die Adreßumsetzung so, daß eine die Adreßumsetzung für ein spezielles Ursprungselement initialisierende Nachricht mit entsprechender Ursprungsadresse im ersten Netz an eine beliebige oder eine bestimmte Adresse im zweiten Netz gesendet wird. Dabei ist es unerheblich, ob die Nachricht mit der Ursprungsadresse des Ursprungselementes tatsächlich vom Ursprungselement gesendet wird oder ob die Adreßumsetzung stellvertretend durch ein anderes Netzelement initialisiert wird.

Herkömmliche Adreßumsetzer führen an dieser Stelle eine Adreßumsetzung aus, indem der dem ersten Netz zuzurechnenden Ursprungsadresse eine "Stellvertreteradresse" im zweiten Netz zugewiesen wird.

Erfindungsgemäß werden hingegen der initialisierenden Nachricht Informationen entnommen, aus denen die Anzahl benötigter Kanäle für die umzusetzende Verbindung hervorgeht. Diese Informationen können explizit in einem oder mehreren Feldern oder Parametern der Nachricht enthalten sein, oder sich implizit aus dem Protokoll der Nachricht ergeben.

Im folgenden wird ein Ausführungsbeispiel mit Bezug auf IP Netze und insbesondere die Übertragung von Daten mittels Real Time Protocol RTP vorgestellt.

Das erwähnte Ursprungselement oder verbindungsanfordernde Netzelement, angeordnet im ersten Netz, soll Verbindung mit einem zweiten Netzelement, mittelbar oder unmittelbar erreichbar über das zweite Netz, verbunden werden. Bei diesen Netzelementen kann es sich beispielsweise um Endgeräte, Media Gateways, Access Konzentratoren, Multimedia Servern oder beliebige andere Netzelemente eines IP Netzes handeln. Im Fall von Endgeräten kann es sich z.B. um ein Voice-over-IP VoIP Endgerät oder um ein Endgerät für IP basierte Videokonferenzen handeln.

Das erste, verbindungsanfordernde Netzelement weist eine erste IP Adresse auf, und das zweite Netzelement weist eine zweite IP Adresse auf. Es ist in vielen Fällen erforderlich, daß die Netzelemente mehrere Adressen aufweisen. Dies wird in IP Netzen durch die Portnummern der Protokolle UDP und TCP gewährleistet. Eine vollständige TCP/UDP Adresse besteht daher immer aus IP Adresse und Portnummer.

Diese TCP oder UDP Adressen werden im folgenden betrachtet.

Das Ursprungselement ist mit dem ersten Kommunikationsnetz verbunden und damit Element bzw. Bestandteil des ersten Netzes. Mit dem ersten Netz ebenfalls verbunden ist ein Steuerelement, welches der Verbindungssteuerung dient, und der erfindungsgemäße Adreßumsetzer. Das Steuerelement und der Adreßumsetzer sind außerdem Bestandteile des zweiten Netzes bzw. mit diesem verbunden. Das Steuerelement und der Adreßumsetzer befinden sich am Netzübergang zwischen den beiden Netzen.

Zwischen dem Ursprungselement und dem Steuerelement sowie zwischen dem Steuerelement und dem zweiten Netzelement besteht eine Signalisierungsverbindung. Es ist für die vorliegende Erfindung unwesentlich, ob die Signalisierungsverbindung zum Steuerelement zunächst aufgebaut werden muß oder ob diese permanent besteht.

Vom Ursprungselement zum Adreßumsetzer und weiter zum zweiten Netzelement soll eine mehrkanalige Nutzdatenverbindung aufgebaut werden, d.h. eine Verbindung mit mehreren UDP oder TCP Ports.

Wird eine vom Ursprungselement gesendete, eine Verbindungsanforderung enthaltende Signalisierungsnachricht vom Steuerelement empfangen und durch das Steuerelement ein Ziel außerhalb des ersten Netzes festgestellt, tritt der Fall auf, daß eine außerhalb des Netzes ungültige Ursprungsadresse das verbindungsanfordernde Netzelement bezeichnet. Für den weiteren Verbindungsaufbau muß anstatt der ersten Adresse deren im zweiten Netz gültige "Stellvertreteradresse" in die vom Steuerelement erzeugte bzw. weitergeleitete Signalisierungsnachricht eingetragen werden. Diese Adreßumsetzungsbeziehung ist allerdings beim Steuerelement für den Fall dynamischer Adreßumsetzung, bei der die "Stellvertreteradresse" erst zugewiesen wird, wenn eine Verbindung über den Adreßumsetzer durch das Ursprungselement angefordert wird, beispielsweise also beim Etablieren der Nutzdatenverbindung, zu dem Zeitpunkt, zu dem das Steuerelement die Signalisierungsnachricht weiterleiten muß, um zunächst die Signalisierungsverbindung zum eigentlichen Ziel weiterzuleiten, überhaupt noch nicht bekannt.

Dieses Problem wird durch die am selben Tag hinterlegten Anmeldung derselben Anmelderin mit dem Titel "Verfahren zur Adreßumsetzung in Paketnetzen und Steuerelement für Kommunikationsnetzwerke" gelöst.

Im Unterschied zur dort beschriebenen Lösung sieht die vorliegende Erfindung allerdings das Festlegen einer Gruppe von Adreßumsetzungsbeziehungen vor. Dieses Festlegen erfolgt bevorzugt durch einen Algorithmus im Adreßumsetzer, der für ein bestimmtes Protokoll bzw. eine bestimmte Anwendung netzweit festzulegen ist.

Für eine RTP Verbindung, die grundsätzlich von einer RTCP Verbindung begleitet wird, kann beispielsweise die Konvention gewählt werden, daß der RTP Verbindung grundsätzlich eine gerade Portnummer zugewiesen wird und für die zugehörige RTCP Verbindung die darauffolgende ungerade Portnummer reserviert wird. Ist dies netzweit bekannt, genügt die Übertragung der RTP Basisadresse (hier: UDP Adresse gebildet aus IP Adresse und Portnummer), um auch die RTCP Adresse (ebenfalls eine UDP Adresse gebildet aus IP Adresse und Portnummer) eindeutig festzulegen.

Somit kann diese Basisadresse und die daraus abgeleitete Basisadreßumsetzungsbeziehung vom Steuerelement verwendet werden, um die der zu erstellenden Verbindung zuzuordnenden Kanäle der Nutzverbindung zu charakterisieren.

Beim Weiterleiten der Signalisierungsnachricht in Vorwärtsrichtung, d.h. zum Ziel hin, wird durch das Steuerelement die im zweiten Netz gültige "Stellvertreteradresse" für das Ursprungselement eingetragen, wodurch es möglich wird, alle Kanäle der Nutzdatenverbindung Ende zu Ende, d.h. zwischen dem Ursprungselement und dem zweiten Netzelement, zu etablieren.

In der umgekehrten Richtung, d.h. für verbindungssteuernde Nachrichten, welche das Steuerelement aus dem zweiten Netz mit einem Ziel innerhalb des ersten Netzes empfängt, wird die aus dem zweiten Netz empfangene Nutzkanaladresse nicht verändert, da es sich bei der signalisierten Nutzkanaladresse um eine globale Adresse, d.h. eine Adresse aus dem Adreßbereich für das zweite Netz, handelt.

Es ist selbstverständlich, daß beliebige Algorithmen zur Festlegung der Adressen der weiteren Kanäle basierend auf der Basisadresse gewählt werden können. Die Erfindung kann in Rahmen des Adreßvorrats für beliebig viele Datenkanäle angewendet werden.

Obwohl sich die Erfindung besonders gut für IP Netze und die Verwendung im Zusammenhang mit Echtzeitkommunikation in IP Netzen eignet, ist die Erfindung nicht auf diesen Anwendungsfall beschränkt. Jedes paketorientierte Netz, das mit Adreßumsetzung arbeitet, kann durch die vorliegende Erfindung verbessert werden.

Wie bereits erwähnt, kann es sich bei den Netzelementen um Endgeräte, Media Gateways, Access Konzentratoren, Multimedia Servern oder beliebige andere Netzelemente eines IP Netzes handeln. Im Fall von Endgeräten kann es sich z.B. um ein Voice-over-IP VoIP Endgerät oder um ein Endgerät für IP basierte Videokonferenzen handeln.

Als Protokoll zur Verbindungsteuerung kann z.B. Session Initiation Protocol SIP, Bearer Independent Call Control BICC, ITU-T H.323, ITU-T H.248 oder Media Gateway Control Protocol MGCP eingesetzt werden.

Die vorliegende Erfindung ist gleichermaßen anwendbar für Adreßumsetzer, die alle IP Adressen des ersten Netzes auf eine einzige IP Adresse des zweiten Netzes umsetzen, und für Adreßumsetzer, die IP Adressen des ersten Netzes jeweils gesondert auf IP Adressen des zweiten Netzes umsetzen. Letzterer Fall spielt dann eine bedeutsame Rolle, wenn die Netztrennung nicht aufgrund knapper Adreßräume erfolgt, sondern aufgrund etwa von Sicherheitserwägungen.

## Patentansprüche

1. Verfahren zur Adreßumsetzung für eine über eine Signalisierungsverbindung gesteuerte Nutzdatenverbindung, wobei die Nutzdatenverbindung aus mehreren Datenkanälen gebildet wird, demgemäß für ein verbindungsanforderndes Netzelement, das einem ersten Kommunikationsnetz zugeordnet ist, eine Basisadreßumsetzungsbeziehung für einen ersten der Datenkanäle zwischen dem ersten und einem zweiten Kommunikationsnetz ermittelt wird,
**dadurch gekennzeichnet,**
**daß** alle weiteren Datenkanäle durch einen vorgegebenen Algorithmus aus der Basisadreßumsetzungsbeziehung gebildet und durch einen Adreßumsetzer eingestellt werden.

2. Verfahren nach Anspruch 1,
**dadurch gekennzeichnet,**
**daß** eine aus der Basisadreßumsetzungsbeziehung ermittelte, das verbindungsanfordernde Netzelement im zweiten Kommunikationsnetz repräsentierende Basisadresse in eine weiterergeleitete Verbindungsanforderung eingesetzt wird.

3. Verfahren nach einem der Ansprüche 1 oder 2,
**dadurch gekennzeichnet,**
**daß** der genannte Algorithmus durch einen Empfänger benutzt wird, um aus der übermittelten Basisadresse des ersten der Datenkanäle die Adressen der weiteren Datenkanäle zu ermitteln.

4. Verfahren nach einem der Ansprüche 1 bis 3,
**dadurch gekennzeichnet,**
**daß** die Adreßumsetzungsbeziehung im Adreßumsetzer dynamisch ist.

5. Verfahren nach einem der Ansprüche 1 bis 4,
**dadurch gekennzeichnet,**
**daß** das erste und das zweite Kommunikationsnetz Paketnetze sind.

6. Verfahren nach einem der Ansprüche 1 bis 5,
**dadurch gekennzeichnet,**
- **daß** das erste und das zweite Netz Paketnetze sind, in denen das Internetprotokoll IP verwendet wird,
- **daß** die genannten Adressen gebildet werden aus IP Adressen und Portnummern des User Datagram Protocol UDP oder des Transmission Control Protocol TCP, und
- **daß** der Adreßumsetzer ein Network Address Translation NAT oder Network Port Adress Translation NPAT Router ist.

7. Verfahren nach einem der Ansprüche 1 bis 6,
**dadurch gekennzeichnet,**
**daß** für die Signalisierungsverbindung eines der folgenden Protokolle verwendet wird: Session Initiation Protocol SIP, Bearer Independent Call Control BICC, ITU-T H.323, ITU-T H.248 oder Media Gateway Control Protocol MGCP.

8. Adreßumsetzer für Kommunikationsnetzwerke, der an einem Übergang zwischen einem ersten und einem zweiten Kommunikationsnetz angeordnet ist, wobei das erste Netz nur innerhalb des ersten Netzes gültige Adressen aufweist,
- mit Mitteln zum Empfang einer Nachricht, die explizit oder implizit Informationen über eine Anzahl zu reservierender Datenkanäle aufweist,
- mit Mitteln zum Ermitteln einer Basisadreßumsetzungsbeziehung und basierend auf dieser Basisadreßumsetzungsbeziehung weiterer Adreßumsetzungsbeziehungen, wobei die Gesamtzahl der Adreßumsetzungsbeziehungen an der Anzahl zu reservierender Datenkanäle orientiert ist.

9. Adreßumsetzer nach Anspruch 8, welcher ferner Mittel zum Begrenzen der Zeitspanne, während der die ermittelten Adreßumsetzungsbeziehungen gültig sind, und/oder Mittel zum selektiven Freigeben reservierter Adreßumsetzungsbeziehungen ansprechend auf das Ausbleiben von Datenverkehr während einer Zeitspanne aufweist.

10. Adreßumsetzer nach einem der Ansprüche 8 oder 9,
**dadurch gekennzeichnet,**
**daß** der Adreßumsetzer Verbindungen des Real Time Protocol RTP in Zusammenhang mit dem Real Time Control Protocol RTCP vermittelt.

## Claims

1. Method for address conversion for a user data connection controlled by means of a signalling connection, the user data connection being formed from a plurality of data channels, according to which, for a connection-requesting network element associated with a first communication network, a base address conversion relation is ascertained for a first of the data channels between the first and a second communication network,
**characterized**
**in that** all further data channels are formed by a prescribed algorithm from the base address conversion relation and are set by an address converter.

2. Method according to Claim 1,
**characterized**
**in that** a base address which is ascertained from the base address conversion relation and represents the connection-requesting network element in the second communication network is inserted into a forwarded connection request.

3. Method according to either of Claims 1 or 2,
**characterized**
**in that** said algorithm is used by a receiver in order to ascertain from the transmitted base address of the first of the data channels the addresses of the further data channels.

4. Method according to one of Claims 1 to 3,
**characterized**
**in that** the address conversion relation in the address converter is dynamic.

5. Method according to one of Claims 1 to 4,
**characterized**
**in that** the first and second communication networks are packet networks.

6. Method according to one of Claims 1 to 5,
**characterized**
- **in that** the first and second networks are packet networks in which the Internet protocol IP is used,
- **in that** said addresses are formed from IP addresses and port numbers from the User Datagram Protocol UDP or from the Transmission Control Protocol TCP, and
- **in that** the address converter is a Network Address Translation NAT or a Network Port Address Translation NPAT router.

7. Method according to one of Claims 1 to 6,
**characterized**
**in that** one of the following protocols is used for the signalling connection: Session Initiation Protocol SIP, Bearer Independent Call Control BICC, ITU-T H.323, ITU-T H.248 or Media Gateway Control Protocol MGCP.

8. Address converter for communication networks which is arranged on a gateway between a first and a second communication network, the first network having addresses which are valid only within the first network,
- having means for receiving a message which explicitly or implicitly has information about a number of data channels which are to be reserved,
- having means for ascertaining a base address conversion relation and, on the basis of this base address conversion relation, further address conversion relations, the total number of address conversion relations being oriented to the number of data channels which are to be reserved.

9. Address converter according to Claim 8, which also has means for limiting the time period during which the ascertained address conversion relations are valid, and/or means for selectively enabling reserved address conversion relations in response to the absence of data traffic during a time period.

10. Address converter according to either of Claims 8 or 9,
**characterized**
**in that** the address converter switches connections associated with the Real Time Protocol RTP in connection with the Real Time Control Protocol RTCP.

## Revendications

1. Procédé de cartographie des adresses pour une communication de données utiles pilotée par une liaison de signalisation, la communication de données utiles étant constituée de plusieurs voies de données, en fonction de quoi, pour un élément de réseau demandant la communication, qui est affecté à un premier réseau de communication, une relation de cartographie des adresses de base est déterminée pour une première des voies de données, entre le premier et le second réseau de communication,
**caractérisé en ce que**
toutes les autres voies de données sont formées par un algorithme prédéfini issu de la relation de cartographie des adresses de base et sont réglées par un cartographe d'adresses.

2. Procédé selon la revendication 1,
**caractérisé en ce que**
une adresse de base, déterminée à partir de la relation de cartographie des adresses de base et représentant l'élément de réseau demandant la communication au sein du second réseau de communication est utilisée dans la demande de communication transmise plus loin.

3. Procédé selon l'une quelconque des revendications 1 ou 2,
**caractérisé en ce que**
l'algorithme cité est utilisé par un destinataire, pour déterminer les adresses des autres voies de données, à partir de l'adresse de base transmise de la première des voies de données.

4. Procédé selon l'une quelconque des revendications 1 à 3,
**caractérisé en ce que**
la relation de cartographie des adresses au sein du cartographe d'adresse est dynamique.

5. Procédé selon l'une quelconque des revendications 1 à 4,
**caractérisé en ce que**
le premier et le second réseau de communication sont des réseaux par paquets.

6. Procédé selon l'une quelconque des revendications 1 à 5,
**caractérisé en ce que**
- le premier et le second réseau sont des réseaux par paquets, dans lesquels le protocole Internet IP est utilisé,
- les adresses citées sont formées d'adresses IP et de numéros de port du protocole UDP (User Datagram Protocol) ou du protocole TCP (Transmission Control Protocol), et
- le cartographe d'adresses est un routeur NAT (Network Address Translation) ou NPAT (Network Port Address Translation).

7. Procédé selon l'une quelconque des revendications 1 à 6,
**caractérisé en ce que**
pour la liaison de signalisation, l'un des protocoles suivants est utilisé : SIP (Session Initiation Protocol), BICC (Bearer Independent Call Controll, ITU-T H.323, ITU-T H.248 ou MGCP (Media Gateway Control Protocol).

8. Cartographe d'adresses pour des réseaux de communication, lequel est disposé sur une transition entre un premier et un second réseau de communication, le premier réseau ne disposant que d'adresses valables au sein du premier réseau,
- avec des moyens pour la réception d'un message présentant des informations explicites ou implicites concernant une quantité de voies de données devant être réservées,
- avec des moyens permettant de déterminer une relation de cartographie des adresses de base et sur la base de cette relation de cartographie des adresses de base, de déterminer d'autres relations de cartographie des adresses, le nombre total des relations de cartographie des adresses s'appuyant sur la quantité de voies de données devant être réservées.

9. Cartographe d'adresses selon la revendication 8,
présentant par ailleurs des moyens permettant de délimiter la période au cours de laquelle les relations de cartographie des adresses préalablement déterminées sont valables et/ou des moyens de validation sélective de relations de cartographie des adresses réservées, répondant à l'absence d'un échange de données au cours d'une période.

10. Cartographe d'adresses selon l'une quelconque des revendications 8 ou 9,
**caractérisé en ce que**
le cartographe d'adresses transmet des liaisons du protocole en temps réel RTP (Real Time Protocol), en corrélation avec le protocole RTCP (Real Time Control Protocol).
